# EUROPÄISCHE PATENTSCHRIFT

(11) **EP 0 480 216 B1**
(45) Veröffentlichungstag und Bekanntmachung des Hinweises auf die Patenterteilung: **11.08.1993**
(21) Anmeldenummer: 91115970.5
(22) Anmeldetag: 19.09.1991
(51) Int. Cl.: C02F 9/00, C02F 1/64, C02F 5/00

(54) **Verfahren zum Behandeln von Waschwasser aus der Gaswäsche einer Eisenerzreduktionsanlage**
Process for the treatment of wash water from gas scrubbers of an iron ore reduction plant
Procédé pour le traitement de la lessive provenant du lavage de gaz d'une installation pour la réduction de minerai de fer

(30) Priorität: 11.10.1990 DE 4032288
(43) Veröffentlichungstag der Anmeldung: 15.04.1992
(73) Patentinhaber: DEUTSCHE VOEST-ALPINE INDUSTRIEANLAGENBAU GMBH, 40094 Düsseldorf (DE); VOEST-ALPINE Industrieanlagenbau GmbH, A-4020 Linz (AT)
(72) Erfinder: Vuletic, Bogdan, W-4000 Düsseldorf 1 (DE)
(74) Vertreter: Pfenning, Meinig & Partner

(56) Entgegenhaltungen:
- DE-A- 1 911 199
- DE-A- 3 714 016
- DE-C- 295 652
- US-A- 3 171 800
- US-A- 4 931 187
- 'LEHR- UND HANDBUCH DER ABWASSERTECHNIK, DRITTE AUFGABE, BAND VII' , ABWASSERTECHNISCHE VEREINIGUNG E.V. , BERLIN

## Beschreibung

Die Erfindung betrifft ein Verfahren zum Behandeln von Waschwasser aus der Gaswäsche einer Eisenerzreduktionsanlage, wobei das Waschwasser in einem Gaswäscher mit dem Rohgas in direkten Kontakt gebracht, aus dem Gaswäscher abgezogen und nach einer Feststoffabscheidung dem Gaswäscher abgekühlt wieder zugeführt wird.

Aus der DE-PS 26 54 579 ist ein Verfahren zum Regenerieren beladener Waschflüssigkeiten bekannt, wobei das in einer Regenerierkolonne gestrippte sowie anschließend gekühlte und ein Kondensat bildende Strippgas einer Nachwaschkolonne aufgegeben, mit Wasser gewaschen und abgezogen wird. Das Sumpfprodukt der Nachwaschkolonne wird anschließend mit einem Teilstrom der Waschflüssigkeit einer Extraktion mit dem Ergebnis einer Trennung der Bestandteile in eine kohlenstoffreiche leichte und eine organische Lösungsmittel und Wasser enthaltende schwere Phase unterzogen, wobei die schwere Phase dem Regenerierturm wieder zugeführt wird. Dieses Verfahren ist anlagentechnisch aufwendig und erfordert durch die Schwerkrafttrennung relativ lange Umlaufzeiten. Verstopfungen und Kalksteinablagerungen werden nicht wirkungsvoll vermieden.

Aus der DE-PS 37 14 016 ist es bekannt, das beladene Waschwasser nach der Gaswäsche bei annähernd dem gleichen Druck, bei dem das Gas gewaschen wurde, mit einem sauerstoffhaltigen Gas in Berührung zu bringen, anschließend auf Atmosphärendruck zu entspannen und Feststoffe abzusetzen.

Bei dieser Naßoxidation der Beladungsstoffe erfolgt ein vollständiger Verbrauch des Sauerstoffanteils.

Auch dieses Verfahren ist nicht in der Lage, sich absetzende und aushärtende Feststoffablagerungen in den Leitungen zu verhindern. Die notwendigen chemischen Umwandlungsprozesse zur Reinigung von Waschwassern aus der Gaswäsche einer Eisenerzreduktionsanlage sind durch die Verdüsung von Wasser und Luft in einer Zweistoffdüse nicht erzielbar.

Das Verfahren erfordert einen separaten Stripper mit Natronlauge-Zugabe und ist aufwendig zu betreiben.

Die Reinigung des Wassers ist sehr energieintensiv. Es ist daher die Aufgabe der vorliegenden Erfindung, ein Verfahren der anfangs genannten Art anzugeben, bei dem einerseits ohne den Einsatz zusätzlicher Energie für eine Zerstäubung des Wassers eine vollständige chemische Umsetzung der Inhaltsstoffe in einem Prozeß erfolgt und andererseits wirkungsvoll eine Ablagerung und Verkrustung durch diese Reaktionsprodukte in nachfolgenden Rohrleitungen und Wäschern vermieden wird.

Diese Aufgabe wird erfindungsgemäß dadurch gelöst, daß das in einem Eindicker weitgehend von Feststoffen befreite Waschwasser über ein Warmwasserbecken in einen Kühlturm geleitet wird, wo gleichzeitig eine Abscheidung von gelöstem Kohlendioxid, eine Anreicherung mit Sauerstoff, eine Umwandlung der Calzium- und Magnesiumhydrogenkarbonate in Karbonate und des Eisenbikarbonats sowie des Eisensulfats in Eisen(III)hydroxid durchgeführt wird und daß dieses chemisch destabilisierte Waschwasser in einen weiteren in Reihe geschalteten Eindicker durch Zugabe von Flockungs- und Koagulationsmitteln von den neu gebildeten und restlichen Feststoffen befreit, chemisch stabilisiert und über ein Kaltwasserbecken geleitet wird.

Gemäß einer vorteilhaften Ausgestaltung des Verfahrens wird dem Kaltwasserbecken Frischwasser zugeführt, um die Wasserchemie noch weiter aus dem Bereich der Kesselsteinbildung herauszuführen. Durch eine erhöhte Verweilzeit in dem Kühlturm nachgeordneten Eindicker lassen sich große Mengen an eisenhaltigen oxy-hydroxy-Verbindungen, Karbonaten und der im Kühlturm herausgewaschene Schmutz ausfällen.

Anstelle des Kühlturms kann auch ein anderes Belüftungsaggregat eingesetzt werden.

Die Erfindung wird im folgenden anhand eines Ausführungsbeispiels näher erläutert. Dabei zeigt:

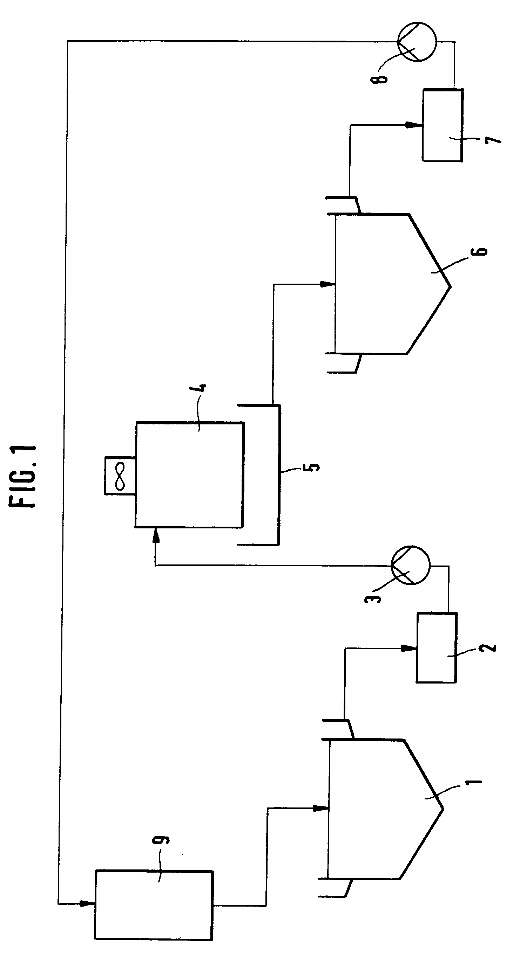

Fig. 1 das Verfahren als Prinzipskizze.

Im ersten Eindicker 1 werden die Feststoffe ausgeschieden, die aus der Gaswäsche 9 kommen. Von da fließt das Wasser zum Warmwasserbecken 2 und wird von der Kühlturmpumpe 3 zum Kühlturm 4 gepumpt. Im Kühlturm 4 wird das Wasser gekühlt und ein Teil der gelösten Salze in Feststoffe umgewandelt. Aus der Kühlturmtasse 5 fließt das Wasser zum zweiten Eindicker 6, wo die neu gebildeten Feststoffe ausgeschieden werden. Von da fließt das aufbereitete Wasser zum Kaltwasserbecken 7 und wird anschließend mittels Vorlaufpumpe 8 zur Gaswäsche 9 gepumpt.

Der Staub aus Schmelzreduktions- und Direktreduktionsanlage beinhaltet große Mengen an frisch reduzierten, sehr reaktionsfähigen Eisenpartikeln.

Im Kontakt mit kohlendioxidgesättigtem Wasser entsteht Eisenbikarbonat. Dieser Prozeß wird noch durch erhöhten Druck beschleunigt und verstärkt. Die Eisenpartikel reagieren auch mit Sulphationen zu Eisensulfat. Auf diese Weise wird ein großer Teil der Eisenfeststoffpartikel in Lösungsform übergeführt.

Durch Austreiben von Kohlendioxid und Anreicherung des Wassers mit Sauerstoff im Kühlturm 4 entsteht aus Eisenbikarbonat und Eisensulfat Eisen(III)hydroxid, das im Wasser unlöslich ist und in Form von Flocken ausfällt. Die ausgefallenen Eisen(III)hydroxid-Flocken reagieren weiter mit dem im Wasser vorhandenen Sauerstoff und bilden feste Eisenoxide.

Bei einer Schmelzreduktionsanlage beinhaltet der Staub noch eine große Menge Calzium- und Magnesiumoxidpartikel, die mit kohlendioxidhaltigem Wasser in der Gaswäsche Bikarbonate bilden, die nach der Belüftung im Kühlturm 4 als Karbonate ausfallen.

Dieses aus dem chemischen Gleichgewicht geratene Wasser mit starken Ablagerungstendenzen wird nach dem Kühlturm 4 dem zweiten Eindicker 6 zugeführt. In dem zweiten Eindicker 6 werden die im Kühlturm 4 eingeleiteten Feststoffausfallvorgänge beendet, die neu gebildeten Feststoffe ausgeschieden, und das Wasser wird stabilisiert, bevor es wieder im Kreislauf verwendet wird.

Durch die in Reihe geschalteten Hauptkomponenten erster Eindicker 1, Kühlturm 4 und zweiter Eindicker 6 können speziell im zweiten Eindicker 6 große Mengen an eisenhaltigen oxy-hydroxy-Verbindungen, an Karbonaten und im Kühlturm herausgewaschener Schmutz durch den Einsatz von Flockungs- und Koagulationsmitteln herausgelöst und abgeschieden werden.

Eine Kesselsteinbildung wird somit wirkungsvoll verhindert. Es wird eine stabile Wasserqualität auf der Versorgungsseite garantiert. Durch Einleitung von Frischwasser zum Kaltwasserbecken wird eine weitere Kesselsteinbildung wirkungsvoll vermieden.

Für die Anordnung des Zweiten Eindickers 6 in Reihe ist keine zusätzliche Pumpe erforderlich. Von der Kühlturmtasse 5 wird das Wasser durch Schwerkraft in den Eindicker 6 und anschließend in das Kaltwasserbecken 7 geleitet. Bei Ausfall eines Eindickers wird der zweite zur herkömmlich bekannten Klärung des Waschwassers eingesetzt.

Veränderungen am vorhandenen Kühlturm sind nicht erforderlich.

## Patentansprüche

1. Verfahren zum Behandeln von Waschwasser aus der Gaswäsche einer Eisenerzreduktionsanlage, wobei das Waschwasser in einem oder mehreren Gaswäschern mit dem Rohgas in direkten Kontakt gebracht, aus dem Gaswäscher abgezogen und nach einer Feststoffabscheidung dem Gaswäscher abgekühlt wieder zugeführt wird,
**gekennzeichnet dadurch,** daß das in einem Eindicker (1) weitgehend von Feststoffen befreite Waschwasser über ein Warmwasserbecken (2) in einen Kühlturm (4) geleitet wird, wo das Wasser gekühlt wird und gleichzeitig eine Abscheidung von gelöstem Kohlendioxid, eine Anreicherung mit Sauerstoff, eine Umwandlung der Calzium- und Magnesiumhydrogenkarbonaten in Karbonate und des Eisenbikarbonats sowie des Eisensulfats in Eisen(III)hydroxid durchgeführt wird und daß dieses chemisch destabilisierte Waschwasser in einen weiteren in Reihe geschalteten Eindicker (6) durch Zugabe von Flockungs- und Koagulationsmitteln von den neu gebildeten und restlichen Feststoffen befreit, chemisch stabilisiert und über ein Kaltwasserbecken (7) geleitet wird.

2. Verfahren nach Anspruch 1
gekennzeichnet dadurch, daß dem Kaltwasserbecken (7) Frischwasser zugeführt wird.

3. Verfahren nach Anspruch 1,
gekennzeichnet dadurch, daß die Kühlung des Waschwassers in einem Belüftungsaggregat durchgeführt wird.

4. Vorrichtung zur Durchführung des Verfahrens nach den Ansprüchen 1 bis 3, bestehend aus einem ersten, dem Gaswäscher (9) unmittelbar nachgeschalteten Eindicker (1) und einem weiteren Eindicker (6), wobei zwischen den beiden Eindickern (1, 6) ein Kühlturm (4) vorgesehen ist.

5. Vorrichtung nach Anspruch 4,
dadurch gekennzeichnet, daß jedem Eindicker (1, 6) ein Wasserbecken (2, 7) und eine Pumpe (3, 9) zugeordnet ist.

## Claims

1. Process for the treatment of wash water from gas scrubbers of an iron ore reduction plant, wherein the wash water is put into direct contact with the raw gas in one or more gas scrubbers, is extracted from the gas scrubber and, after separation of solids, returned to the gas scrubber in a cooled state, **characterised in that** the wash water, which is extensively freed of solids in a thickening device (1), is ducted via a hot-water basin (2) into a cooling tower (4), where the water is cooled whilst simultaneously carrying out a separation of released carbon dioxide, enrichment with oxygen, convertion of calcium- and magnesium-hydrogen carbonates into carbonates and of the iron bicarbonates as well as the iron sulfate into iron(III)hydroxide, and that this chemically destabilized wash water is in a further thickener (6), which runs in tandem, freed of newly formed and residual solids by way of adding flocculating and coagulating agents, chemically stabilized and ducted via a cold-water basin (7).

2. Process according to claim 1, **characterised in that** fresh water is ducted into the cold-water basin (7).

3. Process according to claim 1, **characterised in that** the cooling of the wash water is carried out in a ventilating unit.

4. Device for carrying out the process according to claims 1 to 3, comprising a first thickening device (1) which is connected immediately behind the gas washer (9), and a further thickening device (6), with a cooling tower (4) provided between the two thickening devices (1, 6).

5. Device according to claim 4, **characterised in that** each thickening device (1, 6) is associated with a water basin (2, 7) and a pump (3, 9).

## Revendications

1. Procédé pour le traitement de l'eau de lavage provenant du lavage des gaz d'une installation de réduction du minerai de fer, dans lequel l'eau de lavage est amenée en contact direct avec le gaz brut dans un ou plusieurs laveurs de gaz, est extraite du laveur de gaz et est ramenée refroidie vers le laveur de gaz après une séparation des corps solides, caractérisé en ce que l'eau de lavage débarrassée dans une large mesure des corps solides contenus dans un concentrateur (1) est amené dans une tour de refroidissement (4) après avoir traversé une cuve à eau chaude (2) où l'eau est refroidie et simultanément sont réalisés une séparation du gaz carbonique dissoud, un enrichissement en oxygène, une transformation des carbonates hydratés de calcium et de magnésium en carbonate et du bi-carbonate de fer ainsi que du sulfate de fer en hydroxyde férrique (2v) (III) et en ce que cette eau de lavage chimiquement déstabilisée est amenée dans un autre concentrateur (6) disposé en série pour être débarrassée par l'addition de produits de floculation et de coagulation des corps solides résiduels et venant se former, être stabilisée chimiquement et être conduite à travers une cuve à eau froide (7).

2. Procédé selon la revendication 1, caractérisé en ce que de l'eau fraîche est amenée dans la cuve à eau froide (7).

3. Procédé selon la revendication 1, caractérisé en ce que le refroidissement de l'eau de lavage est réalisé dans un groupe d'aération.

4. Installation pour la réalisation du procédé, selon l'une quelconque des revendications 1 à 3, comportant un premier concentrateur (1) disposé immédiatement derrière le laveur de gaz (9) et un deuxième concentrateur (6), une tour de refroidissement (4) étant prévue entre les deux concentrateurs (1, 6).

5. Installation selon la revendication 4, caractérisée en ce qu'à chaque concentrateur (1, 6) est adjointe une cuve à eau (2, 7) et une pompe (3, 8).
